# EUROPEAN PATENT SPECIFICATION

(11) **EP 1 788 031 B1**
(45) Date of publication and mention of the grant of the patent: **18.01.2012**
(21) Application number: 06255538.8
(22) Date of filing: 27.10.2006
(51) Int. Cl.: C08L 83/04, C08L 83/07, C08K 3/08

(54) **Thermally conductive silicone rubber composition**
Thermisch leitfähige Silikongummi-Zusammensetzung
Composiiton de caoutchouc en silicone thermoconductrice

(30) Priority: 22.11.2005 JP 2005337072
(43) Date of publication of application: 23.05.2007
(73) Proprietor: Shin-Etsu Chemical Co., Ltd., Tokyo (JP)
(72) Inventor: Hirabayashi, Satao Silicone- Electronics R.Center, Matsuida-machi, Annaka-shi Gunma-ken (JP); Meguriya, Noriyuki Silicone- Electronics R.Center, Matsuida-machi, Annaka-shi Gunma-ken (JP)
(74) Representative: Stoner, Gerard Patrick

(56) References cited:
- EP-A1- 1 146 085
- JP-A- 2000 063 670

## Description

This invention relates to a silicone rubber composition capable of forming a silicone rubber molding having a high thermal conductivity, low compression set, and stability at elevated temperature. More particularly, it relates to a highly heat conductive silicone rubber composition of the heat curable type, especially addition or peroxide cure type, capable of forming silicone rubber which undergoes little changes of physical properties upon exposure to elevated temperature.

### BACKGROUND

Liquid silicone rubber compositions of the heat curable type are used in a variety of fields since they are easy to mold and after molding, offer cured products having heat resistance, weather resistance and electrical insulation. In particular, silicone rubber compositions can readily cure into highly heat conductive silicone rubbers merely when loaded with highly heat conductive fillers. They often find use in electric and electronic applications, for example, as heat dissipating sheets for CPU and power transistor chips.

Heat conductive fillers used in prior art heat conductive silicone rubbers include silica, alumina, aluminum, silicon carbide, silicon nitride, magnesium oxide, magnesium carbonate, zinc oxide, aluminum nitride and the like. Silica, due to its low heat conductivity, must be compounded in high loadings, which in turn, makes it difficult to reduce hardness and give too high a viscosity to mold. Alumina and aluminum, which are amphoteric compounds, are susceptible to inherent impurities and when used in silicone rubber compositions, adversely affect heat resistance and compression set. Zinc oxide, due to its high specific gravity of 5.7, tends to settle down and separate out when dispersed in liquid silicone rubber compositions, and problematically its powder is highly hygroscopic. Silicon carbide has a relatively high specific gravity and is available in such ground form that the powder is likely to agglomerate or settle down when dispersed in silicone rubber compositions. Since agglomerates of silicon carbide become cake-like, they are difficult to disperse again and awkward to handle. Silicon nitride and aluminum nitride are readily reactive with water, suffering from the drawback of extremely poor moisture resistance. Magnesium oxide has also been a candidate for highly heat conductive filler, but like aluminum nitride, it is readily reactive with water and has the drawback of extremely poor moisture resistance. Magnesium carbonate is unstable in that it can be decomposed into magnesium oxide by high-temperature heating.

Reference should be made to Japanese Patent Nos. 3,354,087 and 3,694,474. Also to JP2000-63670, which discloses a thermally conductive silicone rubber composition comprising spherical metal silicon particles in the range of about several hundred nm to about several µm in size.

An object of the invention is to provide a silicone rubber composition which is fully shelf stable and cures into a product (silicone rubber) having a high thermal conductivity, heat resistance and low compression set.

The inventors have discovered that a silicone rubber composition having a heat curable organopolysiloxane composition loaded with a metallic silicon powder remains fully shelf stable and cures into a product having a high thermal conductivity, heat resistance and low compression set.

It has been found that a highly heat conductive silicone rubber having a high thermal conductivity, heat resistance and low compression set is obtainable using a metallic silicon powder instead of the conventional heat conductive fillers discussed above. The use of metallic silicon is known in the prior art, for example, the use as a deoxygenating agent for ceramics or refractory; the use of metallic silicon powder as a starting material to silicon nitride powder for use as heat conductivity-imparting filler, as described in Japanese Patent No. 3,354,087; and the preparation of spherical silica by melting metallic silicon and oxidizing in a gas, as described in Japanese Patent No. 3,694,474. None of these patents suggest the use of metallic silicon powder in silicone resins as a heat conductive substance.

The present invention provides a highly heat conductive silicone rubber composition comprising (A) 100 parts by weight of a heat curable organopolysiloxane composition, and (B) 10 to 2,000 parts by weight of a metallic silicon powder having an average particle size of up to 100 µm.

In a preferred embodiment, the metallic silicon powder (B) is a ground metallic silicon powder powdered by a grinding method to an average particle size of 2 to 50 µm, or a spherical metallic silicon powder having an average particle size of 2 to 50 µm.

In a preferred embodiment, the heat curable silicone rubber composition (A) is an addition curing type organopolysiloxane composition or an organic peroxide curing type organopolysiloxane composition.

The preferred addition curing type organopolysiloxane composition is a composition comprising (1) 100 parts by weight of an organopolysiloxane having at least two alkenyl groups attached to silicon atoms in a molecule, (2) 0.1 to 50 parts by weight of an organohydrogenpolysiloxane having at least two hydrogen atoms attached to silicon atoms in a molecule, and (3) a catalytic amount of an addition reaction catalyst.

The preferred organic peroxide curing type organopolysiloxane composition is a composition comprising (a) 100 parts by weight of an organopolysiloxane having on average at least two alkenyl groups in a molecule, represented by the average compositional formula (iii):

R³_{d}SiO_{(4-d)/2} (iii)

wherein R³ is a substituted or unsubstituted monovalent hydrocarbon group, 0.0001 to 10 mol% of R³ being alkenyl groups and at least 80 mol% of R³ being methyl groups, and d is a positive number of 1.9 to 2.4, and (b) an effective amount of an organic peroxide.

### BENEFITS

The highly heat conductive silicone rubber composition of the invention cures into a product having a high thermal conductivity, heat resistance and low compression set and remains fully stable during shelf storage. Owing to these properties, the composition is useful as a heat conductive material or heat dissipating material in automobiles and electric and electronic equipment where satisfactory heat resistance, heat conductivity and rubber elasticity are required.

In a preferred embodiment, the heat curable silicone rubber composition as component (A) may be either an addition reaction curing type organopolysiloxane composition or an organic peroxide curing type organopolysiloxane composition. The addition reaction curing type organopolysiloxane composition is preferably defined as comprising (1) 100 parts by weight of an organopolysiloxane having at least two alkenyl groups attached to silicon atoms in a molecule, (2) 0.1 to 50 parts by weight of an organohydrogenpolysiloxane having at least two hydrogen atoms attached to silicon atoms (i.e., SiH groups) in a molecule, and (3) a catalytic amount of an addition reaction catalyst. The organic peroxide curing type organopolysiloxane composition is preferably defined as comprising (a) 100 parts by weight of an organopolysiloxane having on average at least two alkenyl groups attached to silicon atoms in a molecule, and (b) an effective amount of an organic peroxide.

In the addition reaction curing type organopolysiloxane composition, the organopolysiloxane having at least two alkenyl groups in a molecule is used as component (1) or base polymer. It has the following average compositional formula (i):

R¹ₐSiO_{(4-a)/2} (i)

wherein R¹, which may be the same or different, is a substituted or unsubstituted monovalent hydrocarbon group of 1 to 10 carbon atoms, preferably 1 to 8 carbon atoms, and "a" is a positive number of 1.5 to 2.8, preferably 1.8 to 2.5, and more preferably 1.95 to 2.05.

Examples of the substituted or unsubstituted monovalent hydrocarbon groups attached to silicon atoms, represented by R¹, include alkyl groups such as methyl, ethyl, propyl, isopropyl, butyl, isobutyl, tert-butyl, pentyl, neopentyl, hexyl, cyclohexyl, octyl, nonyl and decyl; aryl groups such as phenyl, tolyl, xylyl and naphthyl; aralkyl groups such as benzyl, phenylethyl and phenylpropyl; alkenyl groups such as vinyl, allyl, propenyl, isopropenyl, butenyl, hexenyl, cyclohexenyl and octenyl; and substituted forms of the foregoing groups in which some or all of the hydrogen atoms are replaced by halogen atoms (e.g., fluoro, bromo and chloro), cyano groups or the like, such as halo-substituted alkyl groups, e.g., chloromethyl, chloropropyl, bromoethyl and trifluoropropyl, and cyanoethyl.

At least two of the R¹ groups must be alkenyl groups, preferably of 2 to 8 carbon atoms, more preferably 2 to 6 carbon atoms. It is noted that the content of alkenyl groups is preferably 0.0001 to 20 mol%, more preferably 0.001 to 10 mol%, especially 0.01 to 5 mol% based on the entire organic groups R¹ (i.e., the substituted or unsubstituted monovalent hydrocarbon groups described above). The alkenyl groups may be attached to silicon atoms at ends of the molecular chain and/or silicon atoms midway the molecular chain. The inclusion of alkenyl groups attached to the silicon atoms at both ends of the molecular chain is preferred.

No particular limit is imposed on the degree of polymerization. Use may be made of organopolysiloxanes ranging from liquid to gum-like at room temperature. Often, those organopolysiloxanes having an average degree of polymerization of 50 to 30,000, preferably 100 to 20,000, and more preferably 100 to 10,000 are used.

With respect to the structure, the organopolysiloxane has a generally straight chain structure whose backbone is comprised of recurring diorganosiloxane (R¹₂SiO_{2/2}) units (e.g., dimethylsiloxane, diphenylsiloxane, methylphenylsiloxane, methyltrifluoropropylsiloxane, vinylmethylsiloxane units) and which is blocked with a triorganosiloxy (R¹₃SiO_{1/2}) group (e.g., trimethylsiloxy, vinyldimethylsiloxy, divinylmethylsiloxy, trivinylsiloxy, vinyldiphenylsiloxy, vinylmethylphenylsiloxy, phenyldimethylsiloxy, diphenylmethylsiloxy groups) at each end of the molecular chain. However, it may have a partially branched or cyclic structure.

The organohydrogenpolysiloxane (2) serves as a crosslinker for causing the composition to cure through hydrosilylating addition reaction with the alkenyl-containing organopolysiloxane (1). Typically the organohydrogenpolysiloxane has the following average compositional formula (ii):

R²_{b}H_{c}SiO_{(4-b-c)/2} (ii)

wherein R² is a substituted or unsubstituted monovalent hydrocarbon group of 1 to 10 carbon atoms, the letter b is a positive number of 0.7 to 2.1, c is a positive number of 0.001 to 1.0, and b+c is 0.8 to 3.0. The organohydrogenpolysiloxane should have at least 2, preferably at least 3 (ordinarily 3 to about 200), more preferably 3 to 100 silicon-bonded hydrogen atoms (i.e., SiH groups) in a molecule. The hydrogen atoms may be attached to silicon atoms at ends of the molecular chain and/or silicon atoms midway the molecular chain.

Herein R² is a substituted or unsubstituted monovalent hydrocarbon group, examples of which are as described for R¹ in formula (i), and preferably those free of aliphatic unsaturation (like alkenyl).

Exemplary organohydrogenpolysiloxanes (2) include tris(dimethylhydrogensiloxy)methylsilane, tris(dimethylhydrogensiloxy)phenylsilane, 1,1,3,3-tetramethyldisiloxane, 1,3,5,7-tetramethylcyclotetrasiloxane, methylhydrogencyclopolysiloxane, methylhydrogensiloxane-dimethylsiloxane cyclic copolymers, both end trimethylsiloxy-blocked methylhydrogenpolysiloxane, both end trimethylsiloxy-blocked dimethylsiloxane-methylhydrogensiloxane copolymers, both end dimethylhydrogensiloxy-blocked dimethylpolysiloxane, both end dimethylhydrogensiloxy-blocked dimethylsiloxane-methylhydrogensiloxane copolymers, both end trimethylsiloxy-blocked methylhydrogensiloxane-diphenylsiloxane copolymers, both end trimethylsiloxy-blocked methylhydrogensiloxane-diphenylsiloxane-dimethylsiloxane copolymers, copolymers of (CH₃)₂HSiO_{1/2} units and SiO_{4/2} units, and copolymers of (CH₃)₂HSiO_{1/2} units, SiO_{4/2} units, and (C₆H₅)SiO_{3/2} units, and substituted forms of the foregoing in which some or all methyl groups are substituted by different alkyl groups (e.g., ethyl, propyl), aryl groups (e.g., phenyl), or halo-substituted alkyl groups (e.g., 3,3,3-trifluoropropyl).

The molecular structure of the organohydrogenpolysiloxane may be linear, cyclic or branched, or three-dimensional network structure while the number of silicon atoms per molecule, that is, the degree of polymerization is 2 to about 1,000, preferably 3 to about 500, and more preferably 3 to about 300.

The organohydrogenpolysiloxane (2) is preferably blended in an amount of 0.1 to 50 parts, more preferably 0.3 to 30 parts by weight per 100 parts by weight of the organopolysiloxane (1). Differently stated, the organohydrogenpolysiloxane (2) may be blended in such amounts that the molar ratio of silicon-attached hydrogen atoms (SiH groups) in component (2) to silicon-attached alkenyl groups in component (1) is from 0.5 to 5 mol/mol, preferably from 0.8 to 4 mol/mol, and more preferably from 1 to 3 mol/mol.

The addition reaction catalyst (3) is to promote hydrosilylating addition reaction between alkenyl groups in component (1) and SiH groups in component (2). Typical addition reaction catalysts are platinum group metal catalysts including platinum catalysts, for example, platinum black, platinic chloride, chloroplatinic acid, reaction products of chloroplatinic acid with monohydric alcohols, complexes of chloroplatinic acid with olefins, and platinum bisacetoacetate; palladium catalysts; and rhodium catalysts. The addition reaction catalyst is used in a catalytic amount, typically about 0.5 to 1,000 parts, preferably about 1 to 500 parts by weight of platinum group metal per million parts by weight of components (1) and (2) combined.

The organic peroxide curing type organopolysiloxane composition contains (a) an organopolysiloxane having on average at least two alkenyl groups attached to silicon atoms in a molecule as a base polymer and (b) an organic peroxide. The organopolysiloxane (a) has the average compositional formula (iii):

R³_{d}SiO_{(4-d)/2} (iii)

wherein R³ is a substituted or unsubstituted monovalent hydrocarbon group, 0.0001 to 10 mol% of R³ being alkenyl groups and at least 80 mol% of R³ being methyl groups, and d is a positive number of 1.9 to 2.4.

At each occurrence, R³ may be the same or different and is a substituted or unsubstituted monovalent hydrocarbon group of 1 to 10 carbon atoms, preferably 1 to 8 carbon atoms. The subscript d is a positive number in the range of 1.9 to 2.4, preferably 1.95 to 2.05, and more preferably 1.98 to 2.02.

Examples of the substituted or unsubstituted monovalent hydrocarbon groups attached to silicon atoms, represented by R³, are as described for R¹ in average compositional formula (i), and include alkyl groups such as methyl, ethyl, propyl, isopropyl, butyl, isobutyl, tert-butyl, pentyl, neopentyl, hexyl, cyclohexyl, octyl, nonyl and decyl; aryl groups such as phenyl, tolyl, xylyl and naphthyl; aralkyl groups such as benzyl, phenylethyl and phenylpropyl; alkenyl groups such as vinyl, allyl, propenyl, isopropenyl, butenyl, hexenyl, cyclohexenyl and octenyl; and substituted forms of the foregoing groups in which some or all of the hydrogen atoms are replaced by halogen atoms (e.g., fluoro, bromo and chloro), cyano groups or the like, such as halo-substituted alkyl groups, e.g., chloromethyl, chloropropyl, bromoethyl and trifluoropropyl, and cyanoethyl.

At least two of the R³ groups must be alkenyl groups, preferably of 2 to 8 carbon atoms, more preferably 2 to 6 carbon atoms. It is noted that the content of alkenyl groups is preferably 0.0001 to 10 mol%, more preferably 0.001 to 5 mol% based on the entire organic groups R³ (i.e., the substituted or unsubstituted monovalent hydrocarbon groups described above). The alkenyl groups may be attached to silicon atoms at ends of the molecular chain and/or silicon atoms midway the molecular chain.

No particular limit is imposed on the degree of polymerization. Use may be made of organopolysiloxanes ranging from liquid to gum-like at room temperature. Often, those organopolysiloxanes having an average degree of polymerization of about 50 to 30,000, preferably about 100 to 20,000, and more preferably about 100 to 10,000 are used.

With respect to the structure, the organopolysiloxane has a generally straight chain structure whose backbone is comprised of recurring diorganosiloxane (R³₂SiO_{2/2}) units (as exemplified in conjunction with average compositional formula (i)) and which is blocked with a triorganosiloxy (R³₃SiO_{1/2}) group (as exemplified in conjunction with average compositional formula (i)) or hydroxydiorganosiloxy ( (HO) R³ ₂SiO_{1/2}) group at each end of the molecular chain. However, it may have a partially branched or cyclic structure.

The organic peroxide (b) used herein may be selected from well-known peroxides which are used in conventional peroxide cure type organopolysiloxane compositions as a catalyst for promoting crosslinking reaction of organopolysiloxane. Examples include, but are not limited to, benzoyl peroxide, 2,4-dichlorobenzoyl peroxide, p-methylbenzoyl peroxide, o-methylbenzoyl peroxide, 2,4-dicumyl peroxide, 2,5-dimethyl-bis(2,5-t-butylperoxy)-hexane, di-t-butyl peroxide, t-butyl perbenzoate, and 1,1-bis(t-butylperoxycarboxy)hexane.

The organic peroxide is used in a catalytic amount for causing the organopolysiloxane to cure. Although the amount of peroxide may be determined appropriate in accordance with the desired cure rate, it is usually 0.1 to 10 parts, preferably 0.2 to 2 parts by weight per 100 parts by weight of component (a).

The silicone rubber composition of the invention is comprised of (A) the heat curable organopolysiloxane composition described above, and (B) a metallic silicon powder as a highly heat conductive inorganic powder. Metallic silicon has good heat conductivity, a low Mohs hardness, and low malleability due to its metallic nature, and is characterized in that a metal powder is unlikely to agglomerate even when high shear forces are applied. For this reason, metallic silicon is easy to atomize or powder by grinding, and effectively dispersible in organopolysiloxanes. In addition, metallic silicon particles have on their surface a very thin spontaneous oxide film, which is resistant to heat, acid and stain like glass, and prevents electricity conduction and remains stable to heat.

The metallic silicon powder used herein may be prepared by any desired method. Included are metallic silicon powders obtained by a grinding method, for example, a powder obtained by chemically reducing silica into metallic silicon and grinding it in an existing crusher or grinding machine such as a ball mill, and a powder obtained by using as raw material metallic silicon (wafer) fragments and chips resulting from the semiconductor manufacturing process and finely dividing the material; and a spherical metallic silicon powder obtained by melting metallic silicon at high temperature, atomizing the molten silicon in a vapor phase, followed by cooling and solidification into spherical particles. Metallic silicon may have either a single crystal or a polycrystalline structure. Although the purity of metallic silicon powder as atomized is not particularly limited, it is desired from the standpoint of imparting heat conductivity to have a purity of at least 50%, more preferably at least 80%, and even more preferably at least 95%. Metallic silicon powder of a higher purity has a surface spontaneous oxide film which is defect-free, offering better thermal stability at high temperature.

The metallic silicon powder used herein should have an average particle size of up to 100 µm, preferably up to 50 µm, and more preferably up to 25 µm. Particles with an average particle size more than 100 µm may result in cured rubber with low mechanical strength and even having a surface which is irregular on visual observation.

It is noted that the average particle size is determined as a weight average value or median diameter in particle size distribution measurement by the laser light diffraction method.

The metallic silicon powder used as component (B) may be treated with suitable surface treating agents for the purpose of improving the dispersibility of the powder in a silicone rubber composition and the thermal stability of the silicone rubber composition. Suitable surface treating agents include silane coupling agents and partial hydrolyzates thereof, alkylalkoxysilanes and partial hydrolyzates thereof, organic silazanes, titanate coupling agents, organopolysiloxane oils, and hydrolyzable functional group-bearing organopolysiloxanes. With respect to the time of surface treatment, the inorganic powder may be treated previously or at the time of mixing with the organopolysiloxane.

An appropriate amount of the metallic silicon powder (B) loaded is 10 to 2,000 parts, preferably 50 to 1,000 parts, and more preferably 70 to 500 parts by weight per 100 parts by weight of component (A). Less than 10 pbw of the metallic silicon powder fails to provide high heat conductivity whereas more than 2,000 pbw is difficult to incorporate and detracts from rubber strength and physical properties.

An additional heat conductive substance may be used together as long as it does not adversely affect low compression set and heat resistance. In such a case, the metallic silicon powder should account for at least 50% by volume of the entire heat conductive substances.

The additional heat conductive substance is not particularly limited and may be any of existing substances. Suitable examples include alumina, aluminum, silicon carbide, silicon nitride, magnesium oxide, magnesium carbonate, zinc oxide, aluminum nitride, graphite, and fibrous graphite.

In the silicone rubber composition of the invention, there may be further admixed reinforcing or semi-reinforcing fillers including finely divided silica such as fumed silica, precipitated silica, fused silica, fired silica, spherical silica by the sol-gel method, crystalline silica (quartz flour), and diatomaceous earth (inter alia, fused silica and crystalline silica also serving as the additional heat conductive substance), and calcium carbonate; reinforcements such as silicone resins; conductive agents such as carbon black, conductive zinc white and powdered metals; hydrosilylation reaction regulators such as nitrogen-containing compounds, acetylene compounds, phosphorus compounds, nitrile compounds, carboxylates, tin compounds, mercury compounds, and sulfur compounds; heat resistance improvers such as iron oxide and cerium oxide; internal parting agents such as dimethylsilicone oil; tackifiers; thixotropic agents; and the like. These additives may be incorporated insofar as they do not compromise the objects of the invention.

The silicone rubber composition of the invention may be prepared by uniformly mixing the above essential and optional components in a rubber milling machine such as a planetary mixer, twin-roll mill, Banbury mixer, dough mixer or kneader, optionally followed by heat treatment. It is acceptable to premix part or all of the organopolysiloxane (1) or (a) with the metallic silicon powder and optionally another heat conductive filler and a surface treating agent to form a base compound and thereafter, mix the base compound with the remainder of the organopolysiloxane (1) or (a), organohydrogenpolysiloxane (2) for addition crosslinking and addition reaction catalyst (3), or organic peroxide (b), and other optional components.

The silicone rubber composition thus obtained can be molded into suitable silicone rubber parts by various molding processes such as injection molding, casting, in-mold compression molding and extrusion molding processes.

Curing conditions may be selected from a wide range. For example, appropriate curing conditions include a temperature of 80 to 200°C, preferably 100 to 180°C and a time of about 5 seconds to 60 minutes, preferably about 20 seconds to 30 minutes. This may be followed by post-curing for the purposes of stabilizing physical properties, reducing the compression set, removing decomposition residues of peroxide, and removing the residual low molecular weight siloxanes. Oven conditions suitable for the post-curing include a temperature of 80 to 230°C, preferably 120 to 210°C, more preferably 150 to 200°C and a time of about 10 minutes to 70 hours, preferably about 30 minutes to 8 hours.

### EXAMPLE

Examples of the invention are given below by way of illustration and not by way of limitation. All parts are by weight.

### Examples 1-6 and Comparative Examples 1-6

To a planetary mixer were added 40 parts of a dimethylpolysiloxane (1) blocked with a dimethylvinylsiloxy group at each end of its molecular chain and having a viscosity of 1,000 Pa·s at 25°C (degree of polymerization 500), 40 parts of a dimethylpolysiloxane (2) blocked with a dimethylvinylsiloxy group at each end of its molecular chain and having a viscosity of 100 Pa·s at 25°C (degree of polymerization 210), 20 parts of a dimethylpolysiloxane (3) blocked with a trimethylsiloxy group at each end of its molecular chain and having a viscosity of 100 Pa·s at 25°C (degree of polymerization 210), and a heat conductive filler (selected from among metallic silicon powders A, B and C, aluminum oxide, aluminum powder, and ground quartz as characterized in Table 3) in a so controlled amount that the resultant cured rubber might have a heat conductivity of 0.6 W/m·k or 1.0 W/m·k. The mixer continued agitation for 30 minutes. Thereafter, 2.3 parts of methylhydrogenpolysiloxane having SiH groups at both ends and side chains (degree of polymerization 17, SiH content 0.0038 mol/g) as a crosslinker and 0.05 part of ethynyl cyclohexanol as a reaction regulator were added to the mixer, which continued agitation for a further 15 minutes, yielding a silicone rubber composition. The viscosity of the silicone rubber composition was measured by a Brookfield rotational viscometer (TOKIMEC Inc.). The results are shown in Tables 1 and 2. The silicone rubber composition was combined with 0.1 part of a platinum catalyst (Pt concentration 1%), cured in a press at 120°C for 10 minutes, and post-cured in an oven at 200°C for 2 hours. The cured rubber was measured for rubber hardness and compression set (180°C x 22 hours, 25% compression) according to JIS K-6249. Using a similarly cured sheet of 12 mm thick, a heat conductivity was measured by means of a heat conductivity meter QTM-3 (Kyoto Electron Co., Ltd.). The results are also shown in Tables 1 and 2.

### Example 7

In a kneader, 100 parts of a gum-like diorganopolysiloxane consisting of 99.825 mol% dimethylsiloxane units, 0.15 mol% methylvinylsiloxane units, and 0.025 mol% dimethylvinylsiloxane units and having an average degree of polymerization of about 8,000 was mixed with 2.0 parts of a silanol end-capped dimethylpolysiloxane (average degree of polymerization 10) as a dispersant and metallic silicon powder A in an amount of 180 parts so that the resultant cured rubber might have a heat conductivity of 1.0 W/m·k. The kneader continued operation for 30 minutes, forming a silicone rubber compound. To 100 parts of the compound was added 0.5 part of 2,5-dimethyl-bis(2,5-t-butylperoxy)hexane as an organic peroxide crosslinker. Uniform dispersion was achieved in a two-roll mill. The silicone rubber composition was cured in a press at 170°C for 10 minutes, and post-cured in an oven at 200°C for 2 hours. The cured rubber was measured for rubber hardness and compression set (180°C x 22 hours, 25% compression) according to JIS K-6249, and for plasticity according to JIS K-6249, three roll method.

**Table 1**

| Component (pbw) | Example | | | | | Comparative Example | |
|---|---|---|---|---|---|---|---|
| | 1 | 2 | 3 | 4 | 5 | 7 | 8 |
| Metallic silicon powder A | 110 | 200 | 150 | | 180 | | |
| Metallic Silicon powder B | | | | | | 105 | 180 |
| Metallic silicon powder C | | | | 210 | | | |
| Aluminum oxide | | | 90 | | | | |
| Rubber hardness (Type A) | 35 | 60 | 55 | 47 | 67 | 32 | 58 |
| Compression set (%) | 4 | 4 | 9 | 4 | 4 | 5 | 5 |
| Viscosity (Pa·s) | 30 | 230 | 200 | 190 | - | 36 | 260 |
| Plasticity | - | - | - | - | 320 | - | - |
| Heat conductivity (W/m·k) | 0.6 | 1.0 | 1.0 | 1.0, | 1.0 | 0.6 | 1.0 |

**Table 2**

| Component (pbw) | Comparative Example | | | | | |
|---|---|---|---|---|---|---|
| | 1 | 2 | 3 | 4 | 5 | 6 |
| Aluminum powder | 120 | 250 | | | | |
| Aluminum oxide | | | 230 | 380 | | |
| Ground quartz | | | | | 160 | 200< *1 |
| Rubber hardness (Type A) | 31 | 49 | 22 | 35 | 42 | - |
| Compression set (%) | 91 | 95 | 15 | 26 | 4 | - |
| Viscosity (Pa·s) | 25 | 200 | 27 | 215 | 300 | - |
| Heat conductivity (W/m·k) | 0.6 | 1.0 | 0.6 | 1.0 | 0.6 | the target 1.0 (compounding impossible) |

| | | | | | | |
|---|---|---|---|---|---|---|
| *1 The rubber composition became clumpy when 200 parts of ground quartz was compounded, and it could not be compounded beyond the level. | | | | | | |

**Table 3**

| Heat conductive filler | Type | Average particle size* (µm) |
|---|---|---|
| Metallic silicon powder A | Ground | 12 |
| Metallic silicon powder B | Ground | 5 |
| Metallic silicon powder C | Ground | 10 |
| Aluminum powder | Spherical particles | 5 |
| Aluminum oxide | Spherical particles | 12 |
| Ground quartz | Ground | 5 |

| | | |
|---|---|---|
| * laser diffraction method | | |

## Claims

1. A heat conductive silicone rubber composition comprising
(A) 100 parts by weight of heat curable organopolysiloxane composition, and
(B) 10 to 2,000 parts by weight of metallic silicon powder having an average particle size of 10 to 100 µm.

2. The composition of claim 1, wherein the metallic silicon powder (B) is a ground metallic silicon powder powdered by a grinding method to an average particle size of 12 to 50 µm.

3. The composition of claim 1, wherein the metallic silicon powder (B) is a spherical metallic silicon powder. having an average particle size up to 50 µm.

4. The composition of claim 1, 2 or 3, wherein the heat curable silicone rubber composition (A) is an addition curing type organopolysiloxane composition or an organic peroxide curing type organopolysiloxane composition.

5. The composition of claim 4, using said addition curing type organopolysiloxane composition which comprises
(1) 100 parts by weight of organopolysiloxane having at least two alkenyl groups attached to silicon atoms in the molecule,
(2) 0.1 to 50 parts by weight of organohydrogenpolysiloxane having at least two hydrogen atoms attached to silicon atoms in a molecule, and
(3) a catalytic amount of addition reaction catalyst.

6. The composition of claim 4, using said organic peroxide curing type composition which comprises
(a) 100 parts by weight of organopolysiloxane having on average at least two alkenyl groups in the molecule, represented by the average compositional formula (iii):
R³₄SiO(_{4-4d)/2} (iii)
wherein R³ are substituted or unsubstituted monovalent hydrocarbon groups, 0.0001 to 10 mol% of R³ being alkenyl groups and at least 80 mol% of R³ being methyl groups, and d is a positive number of 1.9 to 2.4, and
(b) organic peroxide in an amount effective for curing.

7. The composition of any one of claims 1 to 6, which cures into a cured rubber having
a heat conductivity of 0.6 to 1.0 W/m·k.

## Patentansprüche

1. Wärmeleitende Siliconkautschukzusammensetzung, umfassend:
(A) 100 Gewichtsteile einer wärmehärtbaren Organopolysiloxanzusammensetzung und
(B) 10 bis 2.000 Gewichtsteile eines metallischen Siliciumpulvers mit einer mittleren Teilchengröße von 10 bis 100 µm.

2. Zusammensetzung nach Anspruch 1, worin das metallische Siliciumpulver (B) ein gemahlenes metallisches Siliciumpulver ist, das mithilfe eines Mahlverfahrens auf eine mittlere Teilchengröße von 12 bis 50 µm pulverisiert ist.

3. Zusammensetzung nach Anspruch 1, worin das metallische Siliciumpulver (B) ein kugelförmiges metallisches Siliciumpulver mit einer mittleren Teilchengröße von bis zu 50 µm ist.

4. Zusammensetzung nach Anspruch 1, 2 oder 3, worin die wärmehärtbare Siliconkautschukzusammensetzung (A) eine Organopolysiloxanzusammensetzung vom Additionshärtungstyp oder eine Organopolysiloxanzusammensetzung vom organischen Peroxidhärtungstyp ist.

5. Zusammensetzung nach Anspruch 4 unter Verwendung der Organopolysiloxanzusammensetzung vom Additionshärtungstyp, die Folgendes umfasst:
(1) 100 Gewichtsteile Organopolysiloxan mit zumindest zwei an Siliciumatome gebundenen Alkenylgruppen pro Molekül,
(2) 0,1 bis 50 Gewichtsteile Organohydrogenpolysiloxan mit zumindest zwei an Siliciumatome gebundenen Wasserstoffatomen pro Molekül und
(3) eine katalytische Menge eines Additionsreaktionskatalysators.

6. Zusammensetzung nach Anspruch 4 unter Verwendung der Zusammensetzung vom organischen Peroxidhärtungstyp, die Folgendes umfasst:
(a) 100 Gewichtsteile Organopolysiloxan mit durchschnittlich zumindest zwei Alkenylgruppen pro Molekül, dargestellt durch die allgemeine Zusammensetzungsformel (iii):
R ³_{d}SiO_{(4-d)/2} (iii)
worin R³ eine substituierte oder unsubstituierte einwertige Kohlenwasserstoffgruppe ist, wobei 0,0001 bis 10 Mol-% von R³ Alkenylgruppen sind und zumindest 80 Mol-% von R³ Methylgruppen sind, und d eine positive Zahl von 1,9 bis 2,4 ist, und
(b) organisches Peroxid in einer Menge, die zum Härten wirksam ist.

7. Zusammensetzung nach einem der Ansprüche 1 bis 6, die zu einem Kautschuk mit einer Wärmeleitfähigkeit von 0,6 bis 1,0 W/m·k härtet.

## Revendications

1. Composition de caoutchouc en silicone thermoconductrice comprenant
(A) 100 parties en poids d'une composition d'organopolysiloxane thermodurcissable, et
(B) de 10 à 2 000 parties en poids d'une poudre de silicium métallique ayant une granulométrie moyenne de 10 à 100 µm.

2. Composition selon la revendication 1, dans laquelle la poudre de silicium métallique (B) est une poudre de silicium métallique broyée par un procédé de broyage à une granulométrie moyenne de 12 à 50 µm.

3. Composition selon la revendication 1, dans laquelle la poudre de silicium métallique (B) est une poudre de silicium métallique sphérique, ayant une granulométrie moyenne pouvant atteindre 50 µm.

4. Composition selon la revendication 1, 2 ou 3, dans laquelle la composition de caoutchouc en silicone thermodurcissable (A) est une composition d'organopolysiloxane de type durcissement par addition ou une composition d'organopolysiloxane de type durcissement par peroxyde organique.

5. Composition selon la revendication 4, utilisant ladite composition d'organopolysiloxane de type durcissement par addition qui comprend
(1) 100 parties en poids d'un organopolysiloxane comportant au moins deux groupes alcényles reliés aux atomes de silicium par molécule,
(2) de 0,1 à 50 parties en poids d'un organohydrogénopolysiloxane comportant au moins deux atomes d'hydrogène reliés aux atomes de silicium par molécule, et
(3) une quantité catalytique de catalyseur de réaction par addition.

6. Composition selon la revendication 4, utilisant ladite composition de type durcissement par peroxyde organique qui comprend
(a) 100 parties en poids d'un organopolysiloxane comportant en moyenne au moins deux groupes alcényles par molécule, représenté par la formule compositionnelle suivante (iii) :
R³₄SiO _{(4-d)/2} (iii)
dans laquelle R³ représente des groupes hydrocarbures monovalents substitués ou non substitués, de 0,0001 à 10% en mole des radicaux R³ étant des groupes alcényles et au moins 80 % en mole des radicaux R³ étant des groupes méthyles, et d est un nombre positif de 1,9 à 2,4, et
(b) du peroxyde organique en une quantité suffisante pour réaliser le durcissement.

7. Composition selon l'une quelconque des revendications 1 à 6, qui durcit sous la forme d'un caoutchouc durci ayant une conductivité thermique de 0,6 à 1,0 W/m.k.
